# EUROPÄISCHE PATENTSCHRIFT

(11) **EP 2 421 671 B1**
(45) Veröffentlichungstag und Bekanntmachung des Hinweises auf die Patenterteilung: **13.04.2016**
(21) Anmeldenummer: 10722570.8
(22) Anmeldetag: 16.04.2010
(51) Int. Cl.: B23B 31/20, B23B 31/02

(54) **SPANNFUTTER**
CLAMPING CHUCK
MANDRIN DE SERRAGE

(30) Priorität: 20.04.2009 DE 102009003802
(43) Veröffentlichungstag der Anmeldung: 29.02.2012
(73) Patentinhaber: Röhm GmbH, 89567 Sontheim (DE)
(72) Erfinder: MACK, Hans-Dieter, 89567 Sontheim (DE)
(74) Vertreter: Hentrich Patentanwälte PartG mbB
(86) Internationale Anmeldenummer: PCT/DE2010/075037
(87) Internationale Veröffentlichungsnummer: WO 2010/121613

(56) Entgegenhaltungen:
- WO-A1-01/34332
- JP-A- 8 141 878
- JP-U- 52 083 084
- US-A- 3 030 119
- US-A- 4 938 490
- US-B1- 6 270 086

## Beschreibung

Die Erfindung betrifft ein Spannfutter mit einem eine sich kegelförmig verjüngende Zentrieröffnung aufweisenden Futterkörper, in der ein mit einem Spanngewinde versehenes Spannteil angeordnet ist, mit einem Winkelgetriebe, das einen in das Spanngewinde eingreifenden, gegenüber dem Futterkörper axial unverschieblich und koaxial zu dem Spannteil gelagerten Gewindering aufweist, der mittels eines Antriebgliedes antreibbar ist, das um eine nicht parallel zu der Futterachse liegende Antriebsachse verdrehbar ist.

Ein derartiges Spannfutter ist beispielsweise aus der DE 100 56 729 A1 bekannt, bei dem das Winkelgetriebe durch einen Schneckentrieb gebildet ist mit einer Schnecke, die in eine Bohrung des Futterkörpers eingesetzt ist, die seitlich in den Futterkörper und tangential zu dem Gewindering eingebracht werden muss.

Die US 3 030 119 zeigt auch ein solches Spannfutter mit einer in der Wandung des Futterkörpers ausgebildeten Körperkammer, in die ein Antriebsglied durch eine seitliche Öffnung eingeführt und gesichert wird. Dem Futterkörper ist an seinem rückwärtigen Ende, mit axialem Abstand zu der Körperkammer, eine Platte zugeordnet.

Die US 4 938 490 A zeigt ebenfalls ein solches Spannfutter. Hierbei wird der Gewindering, und damit die Spannzange über ein Winkelgetriebe, welches mit einem Antriebswerkzeug angetrieben werden kann, bewegt. Das Winkelgetriebe ist als Schneckengetriebe gebildet und wird seitlich - also sehnenartig - in eine Körperkammer eingesetzt. Somit muss die Öffnung für das Antriebswerkzeug mindestens die Abmessung des Antriebsgliedes aufweisen. Nachteilig ist hierbei auch, dass das eingesetzte Antriebsglied in der Körperkammer mittels einer Mutter gesichert werden muss.

In der WO 01/34332 A1 ist ein Spannfutter gezeigt, mit einem im Futterkörper angeordneten Winkelgetriebe in Form eines Kegeltriebs, das sehnenartig bzw. radial in die im Futterkörper befindliche Körperkammer eingesetzt wird.

Auch die US 6 270 086 B1 zeigt ein Spannfutter, welches über das Betätigen eines Winkelgetriebes in Form eines Schnecken- oder Kegelgetriebes betätigt werden kann. Hier ist das Antriebsglied nicht von der der Zentrieröffnung entgegen gesetzten Seite in den Futterkörper eingesetzt. Ebenfalls hat die Öffnung für das Antriebswerkzeug die Abmessung des Antriebsgliedes. Hier ist die zusätzliche Sicherung mittels eines "Edge" notwendig.

Der Erfindung liegt die Aufgabe zugrunde, ein Spannfutter der eingangs genannten Art so auszubilden, dass ein Spannfutter mit einem möglichst einfachen Aufbau und einer kurzen Bauform bereitgestellt ist.

Diese Aufgabe wird nach der Erfindung dadurch gelöst, dass das Antriebsglied nur von der der Zentrieröffnung entgegen gesetzten Seite in eine Körperkammer im Futterkörper einsetzbar ist, die dann durch eine an dem Futterkörper und/oder dem Gewindering abgestützte Platte verschließbar ist, und dass das Antriebsglied durch eine an den Durchmesser eines Antriebswerkzeuges angepasste, nicht dem Einbringen des Antriebsgliedes dienende Öffnung in der Kammerwandung für das Antriebswerkzeug zugänglich ist.

Mit dieser Gestaltung ist der Vorteil verbunden, dass das Antriebsglied komplett in dem Futterkörper in der Körperkammer aufgenommen ist. Damit ist eine bessere Lagerung und ein besserer Schutz verbunden.

Vorteilhaft ist es dabei, wenn das Winkelgetriebe durch einen Schneckentrieb mit einer Schnecke als Antriebsglied gebildet ist. Gleichfalls besteht allerdings auch die Möglichkeit, dass das Winkelgetriebe als Kegeltrieb mit einem Kegelrad als Antriebsglied gebildet, wobei sich bei der Verwendung eines Kegelrades verschiedene Möglichkeiten ergeben, die Öffnung in der Kammerwandung auszubilden, nämlich zum einen schräg nach vorne gerichtet, so dass die Schulterfläche eines entsprechenden Körperbundes ausgenutzt werden kann. Desweiteren besteht selbstverständlich auch die Möglichkeit, die Öffnung radial zu orientieren.

Die Platte dient dazu, das Antriebsglied sicher in der Körperkammer auf zu nehmen, so dass nach der Platzierung des Antriebsgliedes in der Körperkammer die Platte mit dem Futterkörper verbunden wird, wobei zweckmäßigerweise die Platte lösbar an dem Futterkörper gesichert ist, um eine nachträgliche Zugänglichkeit zu dem Antriebsglied zu gewährleisten.

Desweiteren kann in einer Gewindebohrung der Platte eine Anschlagsschraube angeordnet sein, durch die ein Tiefenanschlag für das in die Zentrieröffnung einzusetzende Werkzeug realisiert ist.

Ganz besonders bevorzugt im Rahmen der Erfindung ist es, wenn die Platte durch die Stirnseite einer Antriebsspindel gebildet ist, da sich so eine kompakte Bauform mit wenigen Bauteilen realisieren lässt. Zweckmäßigerweise ist in der Antriebsspindel ein Kanal ausgebildet, der beispielsweise dazu genutzt werden kann, Blasluft durch die Antriebsspindel in den Futterkörper einströmen zu lassen und so bei einem zerspanenden Einsatz des Spannfutters die anfallenden Späne aus dem Arbeitsbereich zu entfernen. Bei Verwendung einer Ausführungsform mit einer in der Platte angebrachten Anschlagsschraube weist zweckmäßigerweise auch diese Anschlagsschraube eine mit dem Kanal kommunizierende Bohrung auf.

Da das Spannfutter nicht stets mit einer Antriebsspindel verbunden sein muss, ist es günstig, wenn dann die Platte durch einen Sicherungsring mit dem Futterkörper verbunden ist, da so der Zusammenbau des Spannfutters gesichert werden kann.

Der besseren Aufnahme und Lagerung des Antriebsgliedes in dem Spannfutter dient auch, dass in der Kammer zur Bildung einer Hinterschneidung ein Innenradius ausgebildet ist, wobei diese Hinterschneidung in dem Futterkörper beispielsweise mit einer Kugelfräse gefertigt werden kann.

Im folgenden wird die Erfindung an in der Zeichnung dargestellten Ausführungsbeispielen näher erläutert; es zeigen:
- Fig. 1: einen Längsschnitt durch ein erfindungsgemäßes Bohrfutter,
- Fig. 2: eine Vorderansicht, teilweise geschnitten gezeigt,
- Fig. 3: eine perspektivische Darstellung des erfindungsgemäßen Spannfutters,
- Fig. 4: eine der Figur 1 entsprechende Darstellung einer alternativen Ausführungsform des Spannfutters,
- Fig. 5: eine der Figur 1 entsprechende Darstellung einer weiteren alternativen Ausführungsform des Spannfutters,
- Fig. 6: eine der Figur 1 entsprechende Darstellung eines an einer Antriebsspindel befestigten Spannfutters,
- Fig. 7: eine der Figur 6 entsprechende Darstellung einer weiteren alternativen Ausführungsform, und
- Fig. 8: eine der Figur 6 entsprechende Darstellung einer weiteren Ausführungsform der Erfindung.

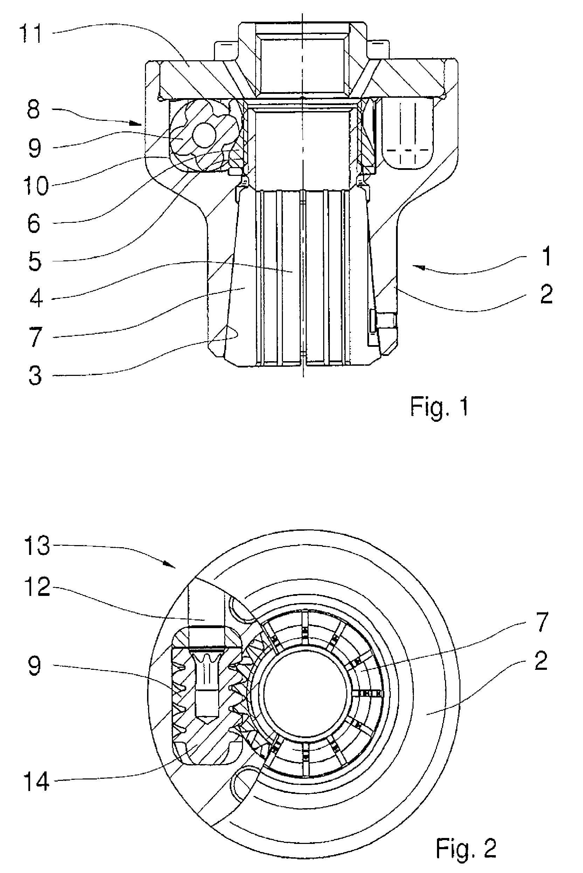

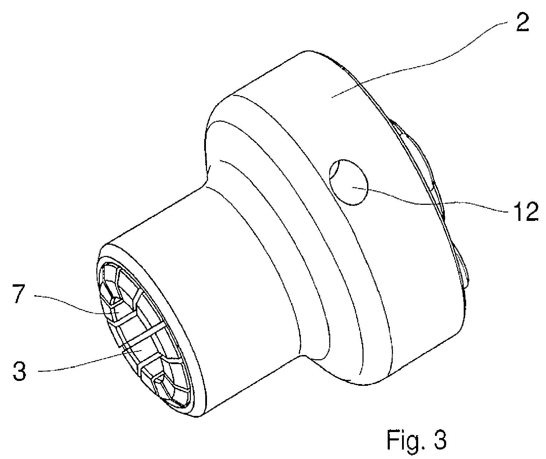

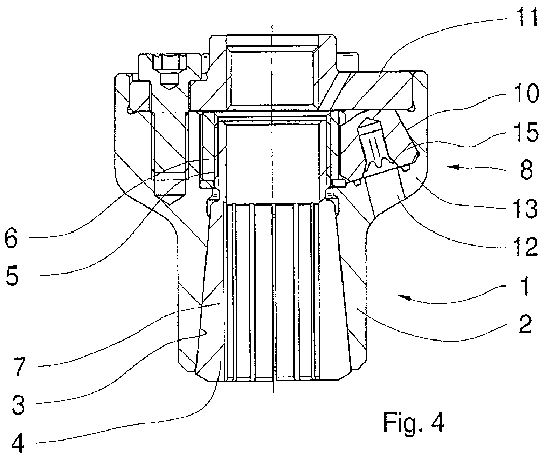

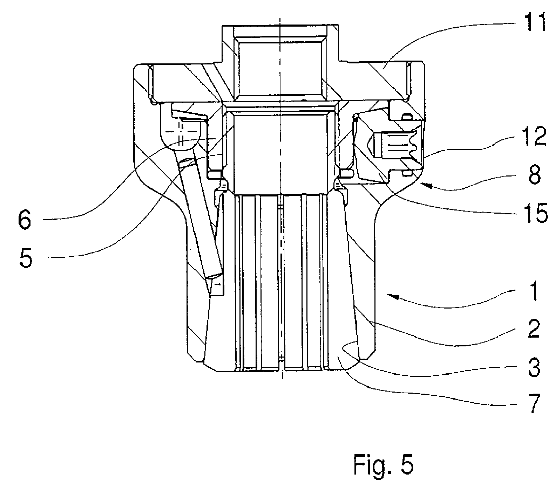

In der Zeichnung ist in den Figuren 1 bis 8 ein Spannfutter 1 dargestellt, das einen Futterkörper 2 aufweist, in dem eine sich kegelförmig verjüngende Zentrieröffnung 3 ausgebildet ist. In dieser Zentrieröffnung 3 ist ein Spannteil 4 angeordnet, das an dem in den Futterkörper 2 weisenden Ende ein Spanngewinde 5 aufweist, in das ein Gewindering 6 eingreift, der in dem Futterkörper 2 axial unverschieblich und koaxial zu dem Spannteil 4 gelagert ist. Das Spannteil 4 ist dabei als geschlitzte Spannhülse 7 gebildet bei der die Schlitze aus Staubschutzgründen mit Gummi gefüllt sein können. Dieser Gewindering 6 ist Teil eines Winkelgetriebes 8 mit einem Antriebsglied 9, das in eine Körperkammer 10 eingesetzt ist. Diese Körperkammer 10 ist von der der Zentrieröffnung 3 entgegengesetzten Seite zugänglich, so dass das Antriebsglied 9 in diese Körperkammer 10 eingesetzt werden kann, die nachfolgend dann durch eine an dem Futterkörper 2 oder dem Gewindering 6 abgestützte Platte 11 verschließbar ist. Das Antriebsglied 9 selber ist durch eine Öffnung 12 in der Kammerwandung 13 für ein Antriebswerkzeug zugänglich, so dass durch ein Verdrehen des Antriebsgliedes 9 der Gewindering 6 verdreht werden kann und dadurch das Spannteil 4 gegenüber dem Gewindering 6 spindelt und sich in der sich kegelförmig verjüngenden Zentrieröffnung 3 axial verstellt, so dass die Möglichkeit gegeben ist, in Abhängigkeit von der Verstellrichtung des Spannteiles 4 ein Werkzeug einzuspannen oder freizugeben. Bei dem in den Figuren 1 bis 3 gezeigten Ausführungsbeispiel ist das Winkelgetriebe 8 durch einen Schneckentrieb mit einer Schnecke 14 als Antriebsglied gebildet, die in den auf der Außenseite entsprechend angepassten Gewindering 6 eingreift. In den Figuren 4 und 5 sind dagegen Ausführungsbeispiele gezeigt, bei dem das Winkelgetriebe 8 durch einen Kegeltrieb mit einem Kegelrad 15 als Antriebsglied 9 gebildet ist.

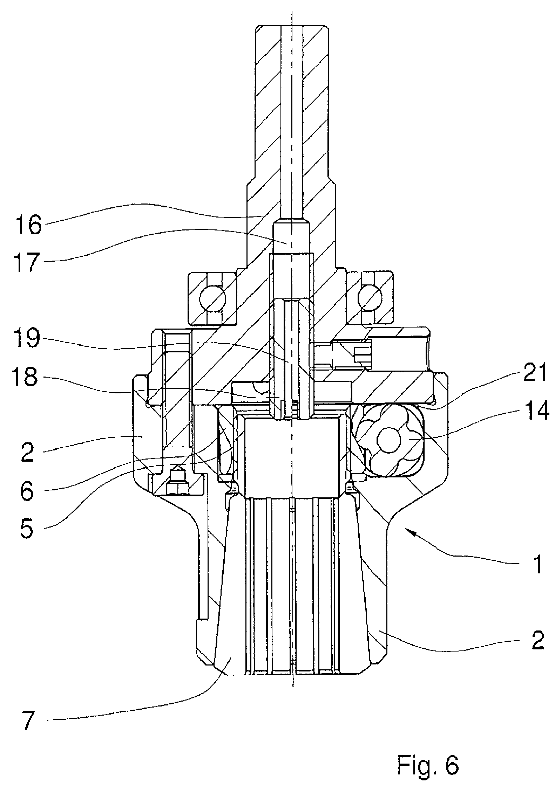

Die Figur 6 zeigt ein Ausführungsbeispiel, bei dem die Platte 11 zur Sicherung des Antriebsgliedes 9 in der Körperkammer 10 durch die Stirnseite einer Antriebsspindel 16 gebildet ist, in der weiterhin ein Kanal 17 ausgebildet ist, in den eine gleichfalls eine Bohrung 19 aufweisende Anschlagsschraube 18 eingesetzt ist, so dass sich die Möglichkeit ergibt, durch den Kanal 17 und die Anschlagschraube 18 Blasluft in das Innere des Futterkörpers einzublasen, während die Anschlagschraube 18 als Tiefenanschlag für ein in das Spannteil 4 einzusetzendes Werkzeug dient.

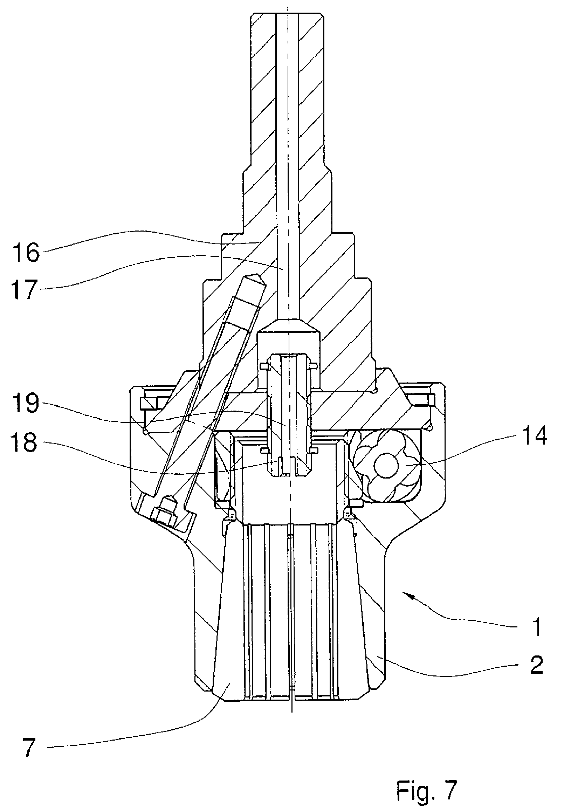

Figur 7 zeigt die Möglichkeit, dass auch bei Befestigung des Spannfutters 1 an der Antriebspindel 16 eine Platte 11 als eigenständiges Bauteil Verwendung finden kann, wobei jeweils die Befestigung des Spannfutters 1 an der Antriebsspindel 16 über mindestens eine, zweckmäßigerweise über mehrere gleichmäßig über den Umfang verteilt angeordnete Schrauben erfolgt. Bei dem in der Figur 7 dargestellten Ausführungsbeispiel ist die Platte 11 gegenüber dem Futterkörper 2 des Spannfutters 1 mittels eines Sicherungsringes 20 verbunden, so dass das Spannfutter 1 auch für den Transport separat von einer Antriebsspindel 16 fertigt konfektioniert ist.

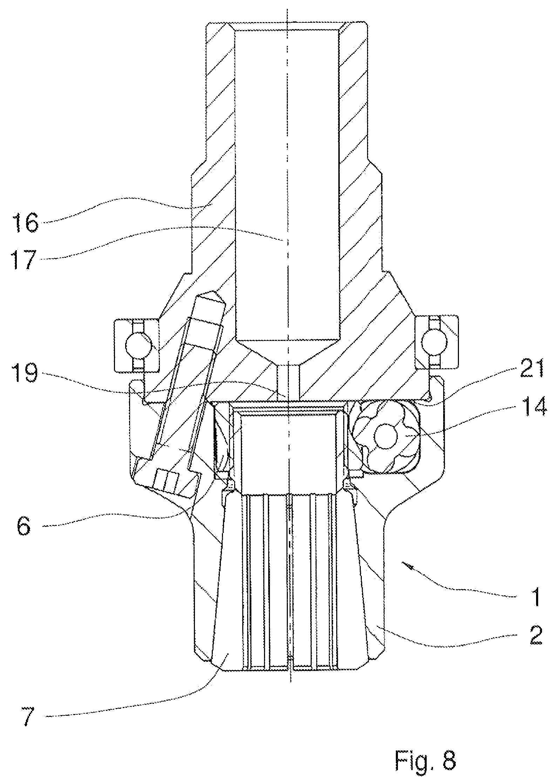

Die Figuren 6 und 8 zeigen, dass in der Körperkammer 10 zur Bildung einer Hinterschneidung 21 ein Innenradius ausgebildet ist, der auch ohne eine entsprechende Platte 11 bereits eine erste provisorische Sicherung der Schnecke 14 bildet.

### Bezugszeichenliste

- 1: Spannfutter
- 2: Futterkörper
- 3: Zentrieröffnung
- 4: Spannteil
- 5: Spanngewinde
- 6: Gewindering
- 7: Spannhülse
- 8: Winkelgetriebe
- 9: Antriebsglied
- 10: Körperkammer
- 11: Platte
- 12: Öffnung
- 13: Kammerwandung
- 14: Schnecke
- 15: Kegelrad
- 16: Antriebsspindel
- 17: Kanal
- 18: Anschlagsschraube
- 19: Bohrung
- 20: Sicherungsring
- 21: Hinterschneidung

## Patentansprüche

1. Spannfutter mit einem eine sich kegelförmig verjüngende Zentrieröffnung (3) aufweisenden Futterkörper (2), in der ein mit einem Spanngewinde (5) versehenes Spannteil (4) angeordnet ist, mit einem Winkelgetriebe (8), das einen in das Spanngewinde (5) eingreifenden, gegenüber dem Futterkörper (2) axial unverschieblich und koaxial zu dem Spannteil (4) gelagerten Gewindering (6) aufweist, der mittels eines Antriebgliedes (9) antreibbar ist, das um eine nicht parallel zu der Futterachse liegende Antriebsachse verdrehbar ist, **dadurch gekennzeichnet, dass** das Antriebsglied (9) nur von der der Zentrieröffnung (3) entgegen gesetzten Seite in eine Körperkammer (10) im Futterkörper (2) einsetzbar ist, die dann durch eine an dem Futterkörper (2) und/oder dem Gewindering (6) abgestützte Platte (11) verschließbar ist, und dass das Antriebsglied (9) durch eine an den Durchmesser eines Antriebswerkzeuges angepasste, nicht dem Einbringen des Antriebsgliedes (9) dienende Öffnung (12) in der Kammerwandung (13) für das Antriebswerkzeug zugänglich ist.

2. Spannfutter nach Anspruch 1, **dadurch gekennzeichnet, dass** das Winkelgetriebe (8) durch einen Schneckentrieb mit einer Schnecke (14) als Antriebsglied (9) gebildet ist.

3. Spannfutter nach Anspruch 1, **dadurch gekennzeichnet, dass** das Winkelgetriebe als Kegeltrieb mit einem Kegelrad (15) als Antriebsglied (9) gebildet ist

4. Spannfutter nach einem der Ansprüche 1 bis 3, **dadurch gekennzeichnet, dass** die Platte (11) lösbar an dem Futterkörper (2) gesichert ist.

5. Spannfutter nach Anspruch 4, **dadurch gekennzeichnet, dass** in einer Gewindebohrung der Platte (11) eine Anschlagschraube (18) angeordnet ist.

6. Spannfutter nach einem der Ansprüche 1 bis 5, **dadurch gekennzeichnet, dass** die Platte (11) durch die Stirnseite einer Antriebsspindel (16) gebildet ist.

7. Spannfutter nach Anspruch 6, **dadurch gekennzeichnet, dass** in der Antriebsspindel (16) ein Kanal (17) ausgebildet ist.

8. Spannfutter nach Anspruch 6 oder 7, **dadurch gekennzeichnet, dass** in der Anschlagschraube (18) eine mit dem Kanal (17) kommunizierende Bohrung (19) ausgebildet ist.

9. Spannfutter nach einem der Ansprüche 2 bis 8, **dadurch gekennzeichnet, dass** die Platte (11) durch einen Sicherungsring (20) mit dem Futterkörper (2) verbunden ist.

10. Spannfutter nach einem der Ansprüche 1 bis 9, **dadurch gekennzeichnet, dass** in der Körperkammer (10) zur Bildung einer Hinterschneidung (21) ein Innenradius ausgebildet ist.

11. Spannfutter nach einem der Ansprüche 1 bis 10, **dadurch gekennzeichnet, dass** das Spannteil (4) als geschlitzte Spannhülse (7) gebildet ist.

## Claims

1. A chuck with a chuck body (2) having a centering hole (3) that is tapered frustoconically and in which is provided a clamping member (4) having a clamping thread (5), with an angle drive (8) having a threaded ring (6) engaged with the clamping thread (5), axially fixed to the chuck body (2), coaxial to the clamping member (4), and rotatable by a drive member (9) that can be rotated about a drive axis that is not parallel to the chuck axis, **characterized in that** the drive member (9) can only be inserted from the end opposite to the centering hole (3) into a body cavity(10) that then can be closed by a plate (11) supported on the chuck body (2) and/or the threaded ring (6), and that the drive member (9) is accessible through one aperture (12) that is adapted to the diameter of the drive tool (9) and does not have to serve as the aperture (12) in the cavity wall (13) through which the drive member (9) is installed.

2. The chuck according to claim 1, **characterized in that** the angle drive (8) is formed by a worm drive with a worm gear (14) as drive member (9).

3. The chuck according to claim 1, **characterized in that** the angle drive is formed as angle drive with an bevel gear (15) as drive member (9).

4. The chuck according to any one of the claims 1 to 3, **characterized in that** the plate (11) is detachably secured on the chuck body (2).

5. The chuck according to claim 4, **characterized in that** a stop screw (18) is provided in a tapped bore of the plate (11).

6. The chuck according to any one of the claims 1 to 5, **characterized in that** the plate (11) is formed by a front end of a drive spindle (16).

7. The chuck according to claim 6, **characterized in that** a passage (17) is formed in the drive spindle (16).

8. The chuck according to claim 6 or claim 7, **characterized in that** a bore (19) is formed in the stop screw (18) and communicates with the passage (17).

9. The chuck according to any one of the claims 2 to 8, **characterized in that** the plate (11) is connected to the chuck body (2) by a retaining ring (20).

10. The chuck according to any one of the claims 1 to 9, **characterized in that** in the body cavity (10) is formed with an inner radius forming an undercut (21).

11. The chuck according to any one of the claims 1 to 10, **characterized in that** the clamping member (4) is a slotted sleeve (7).

## Revendications

1. Mandrin de serrage comprenant un corps de mandrin (2) qui présente une ouverture de centrage (3) se rétrécissant en forme de cône, dans laquelle est disposé un élément de serrage (4) doté d'un filetage de serrage (5), comprenant un engrenage angulaire (8) qui présente une bague filetée (6) qui s'engage dans le filetage de serrage (5), est montée de manière fixe en déplacement axial par rapport au corps de mandrin (2) et de façon coaxiale avec l'élément de serrage (4) et qui peut être entraînée au moyen d'un organe d'entraînement (9), lequel peut être tourné autour d'un axe d'entraînement non parallèle à l'axe de mandrin, **caractérisé en ce que** l'organe d'entraînement (9) ne peut être inséré dans une chambre de corps (10) du corps de mandrin (2) que depuis le côté opposé à l'ouverture de centrage (3), laquelle chambre peut ensuite être fermée par une plaque (11) qui est en appui sur le corps de mandrin (2) et/ou la bague filetée (6), et **en ce que** l'organe d'entraînement (9) est accessible pour l'outil d'entraînement à travers une ouverture (12), prévue dans la paroi de chambre (13), qui est adaptée au diamètre d'un outil d'entraînement et ne sert pas à l'introduction de l'organe d'entraînement (9).

2. Mandrin de serrage selon la revendication 1, **caractérisé en ce que** l'engrenage angulaire (8) est constitué d'un mécanisme à vis sans fin comprenant une vis sans fin (14) en tant qu'organe d'entraînement (9).

3. Mandrin de serrage selon la revendication 1, **caractérisé en ce que** l'engrenage angulaire est réalisé sous forme de train d'engrenages coniques comprenant une roue conique (15) en tant qu'organe d'entraînement (9).

4. Mandrin de serrage selon l'une des revendications 1 à 3, **caractérisé en ce que** la plaque (11) est fixée de manière amovible au corps de mandrin (2).

5. Mandrin de serrage selon la revendication 4, **caractérisé en ce que** dans un trou taraudé de la plaque (11), il est prévu une vis de butée (18).

6. Mandrin de serrage selon l'une des revendications 1 à 5, **caractérisé en ce que** la plaque (11) est constituée de la face frontale d'une broche d'entraînement (16).

7. Mandrin de serrage selon la revendication 6, **caractérisé en ce qu'**un conduit (17) est réalisé dans la broche d'entraînement (16).

8. Mandrin de serrage selon la revendication 6 ou 7, **caractérisé en ce que** dans la vis de butée (18), est réalisé un trou (19) communiquant avec le conduit (17).

9. Mandrin de serrage selon l'une des revendications 2 à 8, **caractérisé en ce que** la plaque (11) est reliée par une bague d'arrêt (20) au corps de mandrin (2).

10. Mandrin de serrage selon l'une des revendications 1 à 9, **caractérisé en ce que** dans la chambre de corps (10), un rayon intérieur est réalisé en vue de former une contre-dépouille (21).

11. Mandrin de serrage selon l'une des revendications 1 à 10, **caractérisé en ce que** la pièce de serrage (4) est réalisée sous forme de douille de serrage (7) fendue.
